# EUROPEAN PATENT APPLICATION

(11) **EP 3 154 221 A1**
(43) Date of publication of application: **12.04.2017**
(21) Application number: 14460095.4
(22) Date of filing: 28.11.2014
(51) Int. Cl.: H04L 12/24

(54) **A METHOD FOR INVENTORY OF OPEN BROADBAND NETWORKS**

(71) Applicant: Suntech S.A., 02-595 Warszawa (PL)
(72) Inventor: Nisiobedzki, Grzegorz, 07-414 Olszewo-Borki (PL)
(74) Representative: Gornicki, Pawel

(57) **Abstract**

Inventory method of the open broadband networks, involving the creation of an object database, containing information about physical and logical network resources, and then linking it to the users by assigning them with rights to database resources. All system data are stored in a uniform manner in the object database with the structure of seven relational tables, including one that stores the numbering of objects and six that store the attribute values. Each table contains a fixed number of columns and a variable number of rows, defining the objects of the class of role that store a set of rights to the data, including: the right to domains, the right to objects, the right to classes, the right to attributes, the right to functions, while the right to domains is assigned to the objects of the class of domain, which are linked to particular inventory objects, whereby each object is associated with at least one domain, and then there are established the rights to particular objects by assigning them to the object of the rights to objects, to the family of objects with similar characteristics by assigning them to the object of the right to classes, to particular attributes by assigning them to the object of the right to attributes, to particular applications and selected functionalities by assigning them to the object of the right to functions, and each user of the system is assigned with specific roles.

## Description

The subject of invention is an inventory method of the open broadband network, designed especially for the inventory of telecommunications networks, both shared and used by many entities in the course of the construction of network infrastructure and/or during the operation of the network.

A growing number of solutions and devices used in telecommunications networks makes effective management of their resources becoming more and more difficult. Correct functioning of the telecommunications network without an efficient inventory system is not possible. Operators use such systems in two ways. The first of these, the most common one, is the purchase of a system for network inventory. In this model, the operator deposits its network in the system and manages it, using the system individually. Another model, the less common one, is network inventory in a system used by the operator in the SaaS model. The operator connects to the final IT environment, deposits the information on their network, and manages the network using the functionality of the system. Although in such a model the network is inventoried by the system used also by other operators, each of them manages own network in the system, without the possibility of sharing selected sets of information. This approach raises a number of restrictions that prevent the efficient management of the network used by many persons, for example the operator who leases the network from another operator is not able to preview the data of a leased network, although some information related to this network is essential for the correlation of connections on the leased assets.

A patent description US8584942 discloses a method of inventory and management of the network, where the information on network resources is obtained automatically by probes placed in the network, and the data collected in this way constitute operator's source of information in the course of the implementation of processes to maintain the network and its expansion. It should be noted, however, that not all data can be obtained this way. In the above-described solution, the data is obtained only from active devices with which you can establish communication. Data acquisition in this solution does not include all the resources, in particular passive resources whose inventory is very time-consuming due to the significant human contribution in the process of data records.

The aim of the invention is to develop a computer-aided inventory method of the open broadband networks that enables the management of the network and its elements by many operators, whereby each of them can manage the network only on a range agreed by other persons.

The inventory method of the open broadband networks according to the invention, involving the creation of an object database for all participants of the solution, including information about physical and logical network resources and linking them with users by assigning rights to their resources is characterized by the fact that all system data, including business data, model data: classes, attributes, syntax and access data, as well as data from various users of the system are stored in a uniform manner in an object-oriented database consisting of seven relational tables, including one that stores the numbering of objects and six storing the values of attributes, whereby each table contains a fixed number of columns and a variable number of rows, following the definition of objects of the class that stores a set of rights to the data, including: the right to access domains, the right to access objects, the right to access classes, the right to access attributes, the right to access functions, while the rights to access domains are assigned to the domain class objects, which are assigned to particular inventory objects, whereby each object is associated with at least one domain, followed by establishing the rights to particular objects by assigning them to the object of the right to object, to the family of objects with similar characteristics by assigning them to the class rights objects, to particular attributes by assigning them to the attributes right object, to particular applications and selected functionalities by assigning them to the functions right object, and each user of the system is assigned with specific roles.

The sum of rights brought about by particular roles specifies the authorization level of the user.

It is favorable that a single inventory object can be assigned to multiple domains.

It is favorable that individual roles are grouped in collective roles, creating a hierarchical tree in such a way that the superior role contains the sum of rights.

It is favorable that the right to domain is the end-to-end approach - exists or does not exist.

It is favorable that the existing right to domain allows you to view objects and/or create new objects and/or modify the existing objects and/or delete objects belonging to the domain.

It is favorable that the right to logical object, arising from its affiliation to the domain is applied directly to this object.

It is favorable that the right to dependent logical object also requires the right to base object.

It is favorable that the right to physical object, arising from its affiliation to the domain is applied directly to that object.

It is favorable that the rights to physical object, for which there is no defined relationship with the domain, are inherited from the parent object.

It is favorable that a relational table that stores the numbering of objects contains three columns presenting: identifier of the object, name of the object and date of the last modification of the object, while the tables that store the attribute values include the following columns: identifier of the attribute, number of the database containing the definition of the attribute, identifier of the object, number of the database containing the object, object value index, value of the attribute, the initial date of the application of values and the final date of the application of values, whereby one table contains an additional column-number of databases, which presents the object that is an attribute value.

Thanks to the columns, which record numbers of databases, it is possible to disperse the data in multiple instances of object-oriented databases. The existence of columns defining the duration of application of attribute values allows you to store the history of changes in the value of objects, as well as to view the status of objects in a specified time. The column titled the index of object values determines the number of the next value for both the attribute and the object. This allows you to save multiple values for the attribute in an orderly manner, as well as to save the correlation between the values of different attributes of the same object in the form of tables of values, where the attributes are columns and the values are set on indexes.

The subject of invention is explained in detail by favorable examples of its creation, referring to the drawing, wherein Figure 1 illustrates the main processes and their participants in the broadband network inventory system, Figure 2 illustrates the method of object location in a hierarchy tree on the basis of an FDN ID, Figure 3 illustrates the example of logical dispersion of data, Figure 4 illustrates the general model of rights to data, Figure 5 illustrates the control of rights to classes and attributes, Figure 6 illustrates the links between particular logical objects, Figure 7 illustrates the network configuration presenting a variant of full visibility, Figure 8 illustrates the variant with a common domain of contact, Figure 9 illustrates the variant with a domain of contact for viewing and modifying, Figure 10 illustrates the variant with a transit operator, Figure 11 illustrates the joint possession of a root of physical objects, Figure 12 illustrates the joint possession of a root of objects with an administrator, Figure 13 illustrates the joint possession of a root in an asymmetric variant, Figure 14 illustrates the example of the open broadband network inventory method for the lease of space in a telecommunications pipe, Figure 15 illustrates the example of the lease of a fiber of an optical cable, and Figure 16 illustrates the example of the lease of space in a server room.

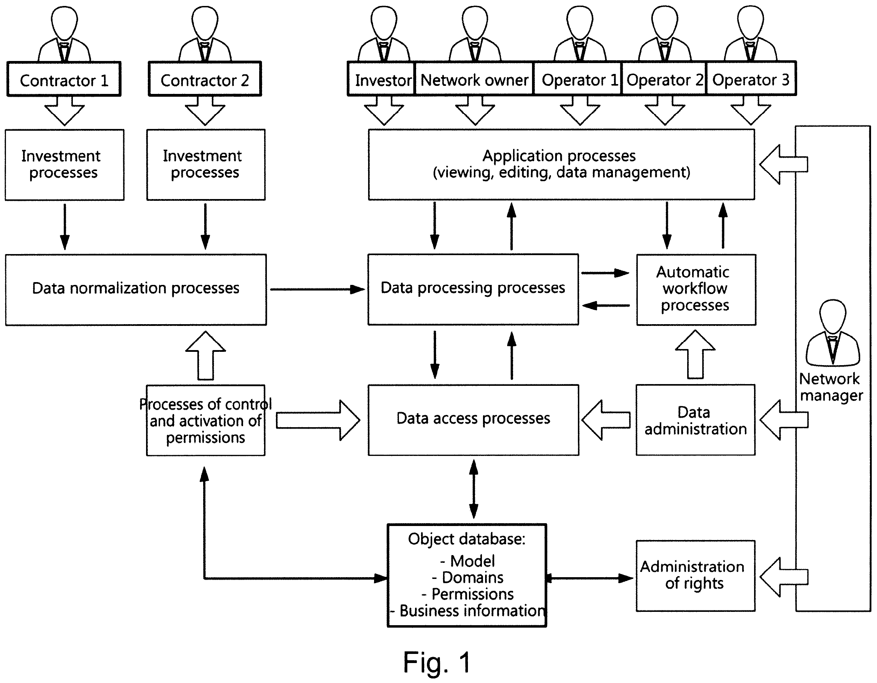

An example of the use of the method according to the invention is shown schematically in Figure 1, which presents the users of the broadband telecommunications network, i.e.: network developers, network investors, operators leasing the network, network manager, as well as the main processes and dependencies between system elements. Each of the system elements uses the data downloaded from the repository, whereby the data are appropriately filtered in accordance with the rights that are given through the processes of control and application of rights.

Object-related database consists of elements typical for databases, i.e.: relational tables that store data, indexes set in tables, as well as stored procedures that allow you to perform a number of operations on the data in these tables, whereby in the method of invention there are formed two types of tables, i.e.: administrative table to confer unique rdn identifiers of t_o objects, as well as tables for the values of attributes of particular types, i.e: t_as, t_ar, t_ad, t_ai, t_ao, t_ab. The types of relational tables of the object-oriented databases, created using the method of invention, are specified in Table 1 below:

**Table 1. Types of relational tables**

| Name | Description | Value type |
|---|---|---|
| T_o | Administrative table intended to confer rdn identifiers to the objects. The table contains the following columns: | Not applicable |
| | • A_o - identifier (rdn) of the object | |
| | • A_n - name of the object specified when creating the object, returned with the fdn identifier of the object, if the *name* attribute of the | |
| | object is not specified [21]. | |
| | • A_t - date of the last modification of the object. *Null* means that the object is being modified. | |
| T_ao | Stores the values of attributes | Indication of the object |
| T_as | Stores the values of attributes | Text (up to 255 characters) |
| T_ai | Stores the values of attributes | Whole number |
| T_ar | Stores the values of attributes | Real number |
| T_ad | Stores the values of attributes | Date |
| T_ab | Stores the values of attributes | Binary to1MB |

Data stored in relational tables of the system from the outside are seen as objects shared through the processes to access data located between the database and the data processing processes.

The structure of tables T_ao, T_as, T_ai, T_ar, T_ad, T_ab is similar, and the difference is only the column type (a_v column) which stores the value and an additional A_vd column in T_ao table, which stores the number of database of the object that is the value. A single tuple in any table specifies the value of a particular attribute of the object. Tables consist of columns illustrated in Table below.

**Table 2. Types of columns in relational tables**

| Name | Description |
|---|---|
| A_a | Identifier (rdn) of the attribute. |
| A_ad | Database number which presents the attribute definition (important when dispersing, defaults to *0*). |
| A_o | Identifier (*rdn*) of the object, whose attribute value (A_a column) is stored in a particular tuple. |
| A_od | Database number which contains the object (important when dispersing, defaults to *0*). |
| A_i | Index of the object value. |
| A_v | Attribute value (from A_a column)), the column type dependent from the table in which it is placed. |
| A_f | Initial date of the application of values. |
| A_u | Final date of the application of values. |

T_ao table contains an additional A_vd column - database number which indicates the object, in the absence of dispersion is 0.

Data record in the database is done using a set of stored procedures installed in the database. Available operations include: creation, modification and deletion of objects. The creation involves entering tuples that describe the object in appropriate tables. Adding a single attribute value involves entering a single tuple in an appropriate table (selected according to the type of value).

Deletion of the object and deletion of the value may be irreversible by deleting tuples from the database or saving the history by modifying the application time - a_u column modification. Deletion of the object means deletion or modification of the application time of all tuples from the database describing this object - a_on = the object being deleted - and all tuples indicating the object being deleted - a_v column = the object being deleted.

Each value - tuple - is associated with an additional value - a value index. The value index is saved in a_i column. It allows you to create tables according to the values of particular attributes. Attributes that do not form an array always have a value of 1. The value of attributes from the same index forms a single row of the array.

Each object of the database has its unique rdn (relative distinguish name) identifier assigned at the time of creation. This identifier is assigned and stored in t_o table.

The range of numbers from 1 to 10000 is reserved for model objects, closely related to the operation of, the system, such as: definitions of classes, attributes, syntaxes of attributes - data types, rights and other predefined objects. Identifiers above 10000 are intended for other data stored in the system, i.e. business data and data model specific for the environment of system users.

Due to the fact that the database extends along, that is through the increase in the number of rows, and the fact that the data model is a collection of objects stored in the same database structure, it is possible to add new elements of the model, such as: classes, attributes or syntaxes, without the necessity of changing the structure of tables - the number of columns. This allows the collection of significantly different data from various operators and from various investment processes. As shown in Figure 1, the data pass through the standardization processes, which first of all take care of the formation of an appropriate data model, then save the data in a fixed model and apply the appropriate rights, which make the data visible in an appropriate manner for many different users.

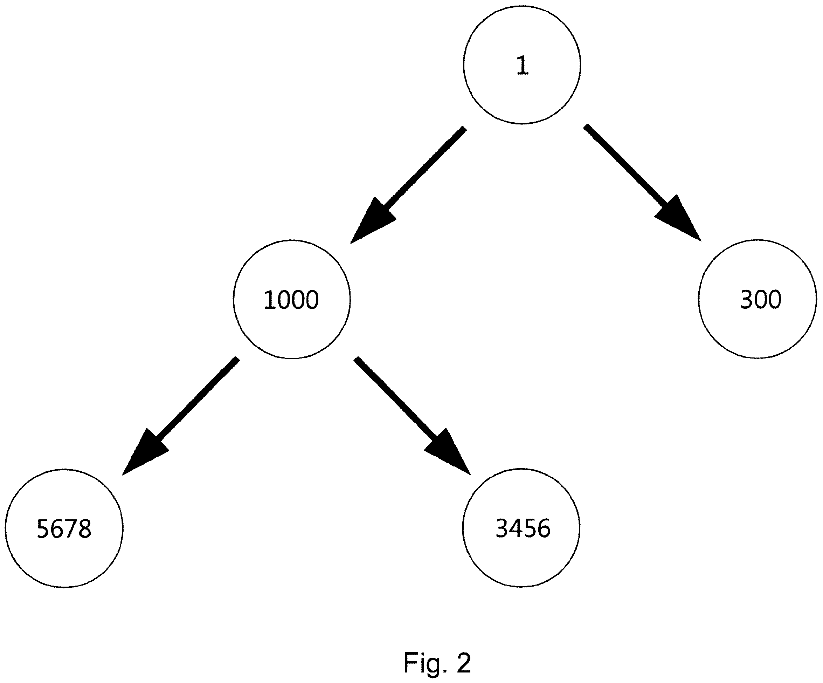

The objects are arranged in a naming tree. It is a three-hierarchy defining the interconnectedness of objects, that is their dependence on the type of object - a superobject. Another object identifier is fdn (full distinguish name), allowing you to locate the object in the tree, as shown in Figure 2, where rdn=5678 and fdn=1.1000.5678.

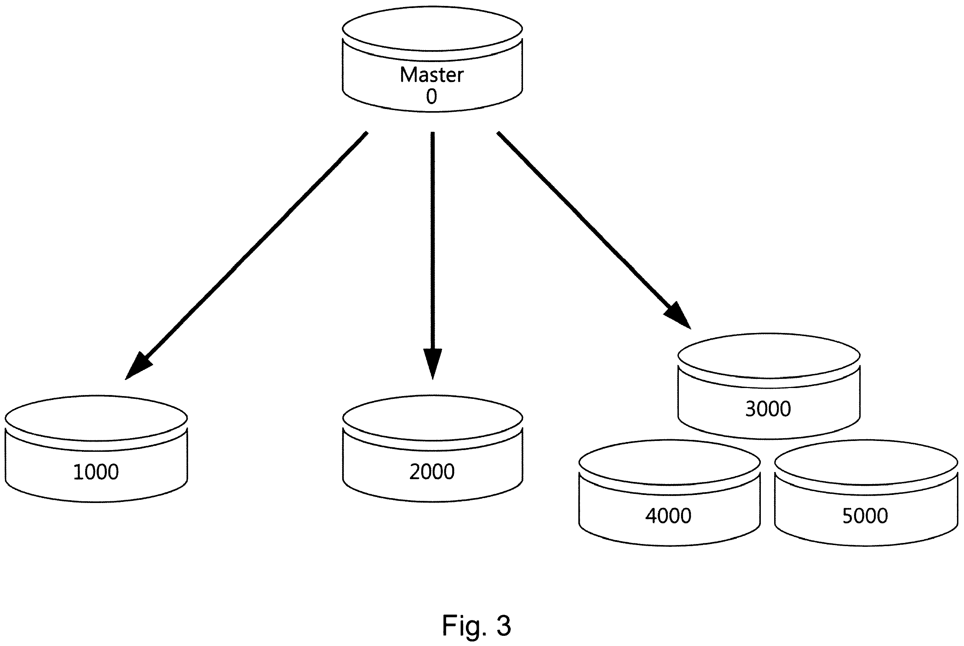

The method of inventory allows dispersion of data in multiple databases with the same structure, involving the transfer of particular elements of the database, for example some subtrees of objects, to external databases, in order to prevent the decline in the effectiveness of the system as a result of a significant increase in the data presented in relational tables, manifested in the increase of rows in those tables. An example of such a dispersion is shown in Figure 3. Numbers identifying particular databases are used when recording the information about the object stored in a particular database. Table 3 presents sample data in T_ao table in the case when for the object with ID 123456 a single attribute with ID 4444 refers to the object with ID 45679, located in a transferred database with ID 3000.

**Table 3. Examples of the data in T_ao table.**

| A_a | A_ad | A_o | A_od | A_i | A_v | A_vd | A_f | A_u |
|---|---|---|---|---|---|---|---|---|
| 23 | 0 | 123456 | 0 | 1 | 5555 | 0 | 15/07/2005 | 01/01/2222 |
| 20 | 0 | 123456 | 0 | 1 | 123456 | 0 | 15/07/2005 | 01/01/2222 |
| 22 | 0 | 123456 | 0 | 1 | 77 | 0 | 15/07/2005 | 01/01/2222 |
| 4444 | 0 | 123456 | 0 | 1 | 45679 | 3000 | 15/07/2005 | 01/01/2222 |

A favorable example presents the method of recording data in an object database created using the method of inventory, for an exemplary person class [77]. The number shown in square brackets is the object identifier. The class is described by the following attributes:
- name [37] : text
- surname [555] :,text
- phone [345] : text
- town [75] : text
- post code [89] : text
- date of birth [5678] : date
- class of the object [22] : reference to the object
- identifier [20] : reference to the object
- parent object [23] : reference to the object

In the case of creation of the object of the above class, the object database presents the data in four tables, when a mandatory table is T_o table, and the other three tables result from three types of values used for attributes of this class. Entries in relational tables are shown below in Tables 4, 5, 6 and 7.

**Table 4. Recording the object identifier in T_o table:**

| A_o | A_n | A_t |
|---|---|---|
| 123456 | Jan Kowalski | 15/07/2005 |

Table 5 shows the set of text attributes in T_as table. The table contains three rows for the attribute 89, showing the method to save changes in the value of this attribute at a time. For the attribute 345 there are shown two rows applicable at the same time, which means that there are two values for this attribute.

**Table 5. Setting text attributes in T_as table**

| A_a | A_ad | A_o | A_od | A_i | A_v | A_f | A_u |
|---|---|---|---|---|---|---|---|
| 555 | 0 | 123456 | 0 | 1 | Kowalski | 15/07/2005 | 01/01/2222 |
| 37 | 0 | 123456 | 0 | 1 | Jan | 15/07/2005 | 01/01/2222 |
| 89 | 0 | 123456 | 0 | 1 | 03-245 | 15/07/2005 | 10/10/2005 |
| 345 | 0 | 123456 | 0 | 1 | 0503 456 897 | 17/07/2007 | 01/01/2222 |
| 345 | 0 | 123456 | 0 | 1 | 0606 234 321 | 17/07/2007 | 01/01/2222 |
| 75 | 0 | 123456 | 0 | 1 | Krakow | 10/10/2005 | 13/09/2007 |
| 89 | 0 | 123456 | 0 | 1 | 09-245 | 10/10/2005 | 13/09/2007 |
| 75 | 0 | 123456 | 0 | 1 | Warszawa | 13/09/2007 | 01/01/2222 |
| 89 | 0 | 123456 | 0 | 1 | 03-789 | 13/09/2007 | 01/01/2222 |

**Table 2. Setting object attributes in T_ao table**

| A_a | A_ad | A_o | A_od | A_i | A_v | A_vd | A_f | A_u |
|---|---|---|---|---|---|---|---|---|
| 23 | 0 | 123456 | 0 | 1 | 5555 | 0 | 15/07/2005 | 01/01/2222 |
| 20 | 0 | 123456 | 0 | 1 | 123456 | 0 | 15/07/2005 | 01/01/2222 |
| 22 | 0 | 123456 | 0 | 1 | 77 | 0 | 15/07/2005 | 01/01/2222 |

**Table 7. Setting data-type attributes in T_ad table**

| A_a | A_ad | A_o | A_ad | A_i | A_v | A_f | A_u |
|---|---|---|---|---|---|---|---|
| 5678 | 0 | 123456 | 0 | 1 | 02/12/1972 | 15/07/2005 | 01/01/2222 |

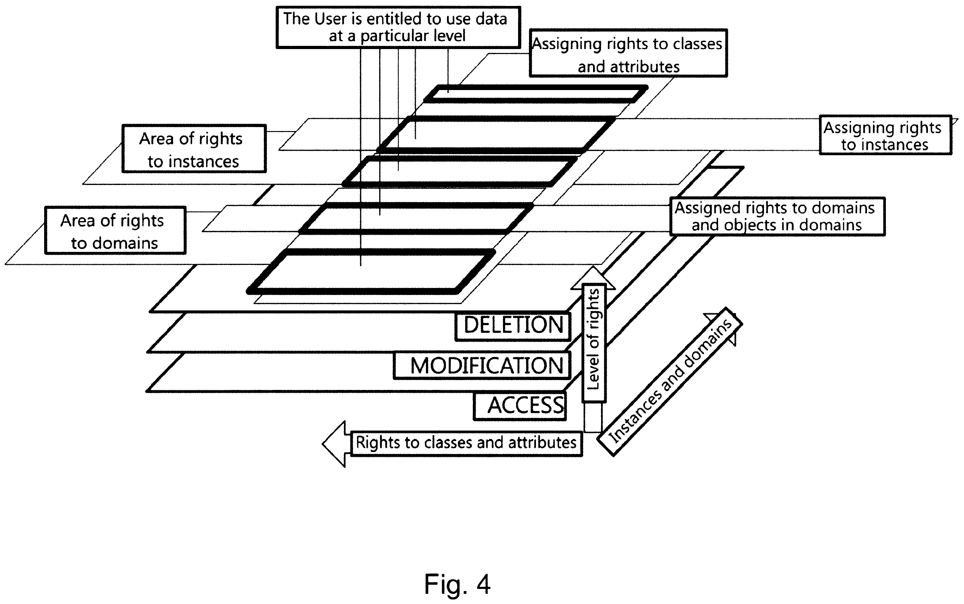

In the inventory method of the broadband network according to the invention there are used two basic groups of rights: to classes and attributes, as well as to objects and domains. There is a principle that the user can perform operations on the object only after being assigned the right to class or attribute of this object, and has the right to this object.or its domain, in which it is located. The general model of rights to data is illustrated in Figure 4.

The control of rights is carried out in particular on the basis of a set of rights to classes and attributes. On this basis and on the basis of the class inheritance hierarchy it is possible to determine whether the user can work with specific classes and their objects. Rights are assigned in two basic ways - by giving rights to the class or its attribute. Giving rights to the class assigns the rights to all class attributes. It is possible to identify the attribute to which you cannot give rights indirectly through the class.

The inheritance mechanism applies to the rights to classes and attributes. This means that assigning the rights to the base class causes their simultaneous assigning to derivative classes. Attributes to which the user is directly entitled in the base class are also available in derivative classes. It is possible to disable the right to inheritance for both the classes and the attributes.

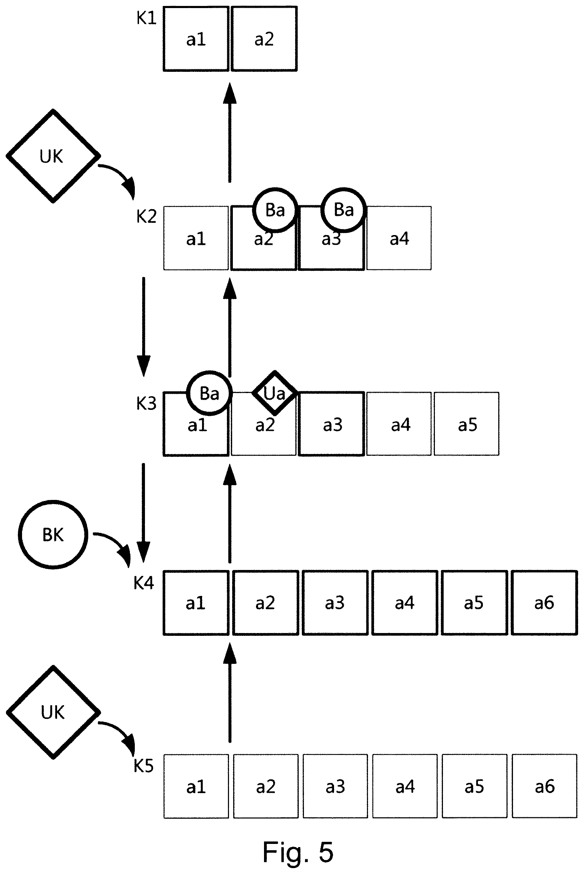

Determination of rights illustrates a favorable embodiment shown in Figure 5, with five classes, i.e. K1, K2, K3, K4 and K5, whereby each successive class, except Class K1 extends the previous one. Class K1 introduces the attributes a1 and a2, while Class K2 provides additional attributes a3 and a4. Attribute a5 appears for the first time in Class K3, while the attribute a6 is visible in Class K4. Class K5 does not introduce any new attributes. The user was entitled to Class K2, which also assign the right to all attributes of this class. However, two of them have disabled the Ba right, which means that the end user has access only to the two other, i.e. a1 and a5. In Class K2, the attribute a1 is not available to the_user, since it disables the Ba rights. In turn, the attribute a2 locked in the base class K2 was assigned the Ua rights again, and so working with it is ultimately possible. A3 was not treated the same way, thus the user is not entitled to it in K3. For the other two attributes, the rights are given under the right to Class K2. Class K4 is locked by BK, which means that all the attributes are not available. Finally, Class K5 was assigned rights to Class UK, which gives access to it and its all attributes.

In the method of invention there are three levels of access to the domain - availability, modification and deletion. The first allows you to view objects assigned to a particular domain, the second allows you to create and modify objects in the domain, while the last one enables deletion of these objects. The user with rights to a particular domain can view associated objects after being given rights to classes and attributes of these objects. The user may be assigned with a list of domains for creation that will be placed on objects created by him.

A single modification of data stored in the network inventory system usually involves a large group of objects and requires monitoring and analysis of relations between these objects. There are many scenarios concerning such modifications. They are associated with particular network technologies and operations specific to these technologies. Definitions of domains are coarse. Domain availability for a particular user, the role of this user, is comprehensive - exists or not. Therefore we cannot determine specific rights to domains for all kinds of modifications that may occur in the network. The right to domain is defined for: viewing objects - improving visibility, creating new objects in the domain, equivalent to assigning the object to the domain, modifying existing objects, deleting objects belonging to the domain, including also the deletion of the object from the domain. When a particular object belongs to more than one domain, in order to make modifications it is necessary that the user has the rights to at least one of these domains.

The inventory method of the opened broadband network includes the logic inventory, describing the logic of network connections, as well as the physical inventory, describing the structure and the location of installed devices, and objects stored in the network inventory system are interrelated. Decomposition of the network into elements associated with separate persons requires taking into account the specificities of the two areas and interpreting interrelationships.

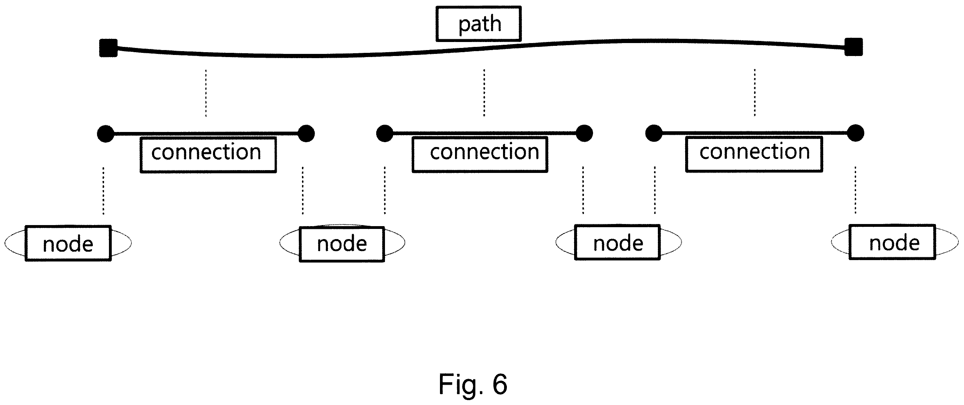

In a favorable embodiment, the logical objects that represent a graph of the network are dependent from each other, as shown in Figure 6. For example, logical connections are based on their terminal nodes, and logical paths are based on component-based connections. Using a dependent object - path - requires access to base objects which it depends from, that is the nodes and the links. Base objects may be generally associated with a different set of domains than their dependent objects. In the inventory method of the open broadband networks according to the invention, the rights arising from the affiliation to domains, relating to particular objects, always apply directly to these objects. If the object is dependent from a base object and the operation requires access to or modification of the base object, it is necessary to have the appropriate rights to such base object as well. In the above embodiment, in order to view the object of connection, it is necessary to have the appropriate rights, resulting from the assignment to domains, for both the connection and the end nodes of this connection. Analogously for the paths that depend on the connection, and indirectly for the nodes. In order to modify the object, it is necessary to have the appropriate rights for both the object and all objects that need to be modified with it.

Physical objects are interrelated in tree structures, while the objects contained in the subtree are usually associated with the same domains as the root of the subtree. Objects lacking defined links to any domain inherit such links from their parent object. Objects with pre-defined links to any domain do not inherit such links from their parent object. In this case, the set of domains of a child object can be completely disjointed from the set of parent object domains. Thus, in order to define the links to domains for a particular device or location, such links shall be established only for the root of the tree - the highest object in the hierarchy) - this device or location. In order to define different sets of domains for the elements of the tree of a particular location, there are determined the same links in the roots of appropriate trees. Because of a dendroidal nature of physical data, it is favorable that the user having any rights to the subtree of physical objects is also entitled to view all parent objects relative to the subtree.

Below are examples of configurations of domains and rights to them, allowing the users associated with single shareholder entities to perform common inventory operations. This example describes the network configuration with at least two independent shareholder entities, referred to as operators A and B.

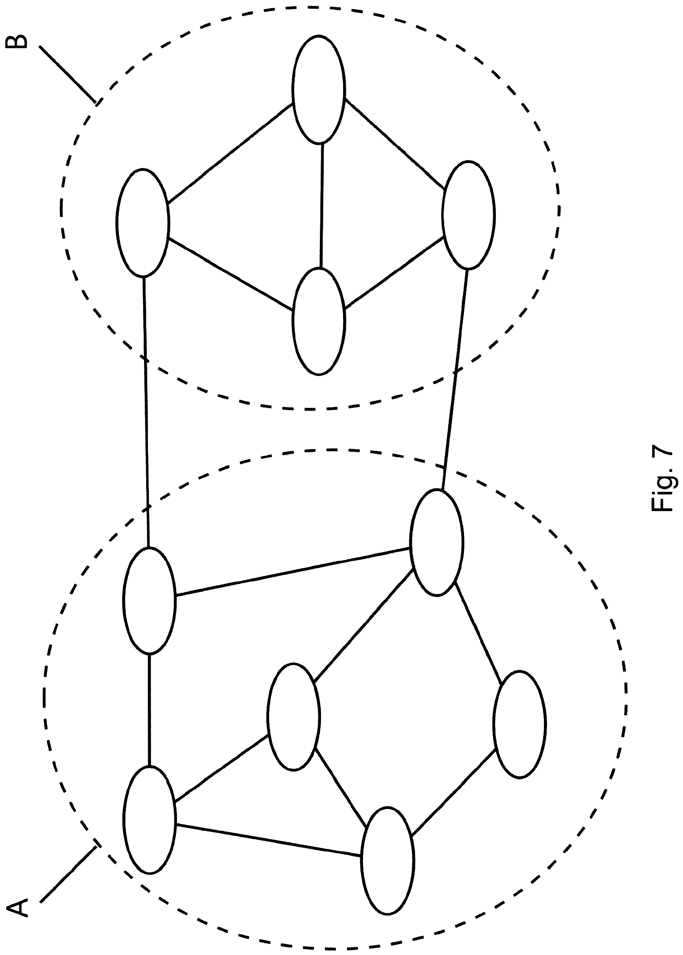

In a favorable embodiment of the network configuration; illustrating the variant of full visibility (Figure 7), all operators can see the whole structure of the network, belonging to them and other operators, but their rights to modify the network are limited to their own domains.

### Domains

**A, B**

### Role

Role: User A
Viewing: **A, B**
Creating, Modifying, Deleting: **A**
Role: User B
Viewing: **A, B**
Creating, Modifying, Deleting: **B**

Role: Supervisor
Viewing, Creating, Modifying, Deleting: **A, B**

### Linking objects and domains

All objects owned by the operator A are linked to the domain **A**

All objects owned by the operator B are linked to the domain **B**

Objects located at the junction of the operators are either linked to domains **A** or **B**, which allow their modification by both operators, or are not linked to **A** and **B,** but only to an additional administrative domain, not included in the drawing. In this case the objects are created by the administrator. The variant of full visibility allows viewing the whole network structure by all persons. It is therefore justified in those applications, where the operators are not competing persons, but for example, branches of the same institution, and the existing limitations of rights are merely a justification of competence.

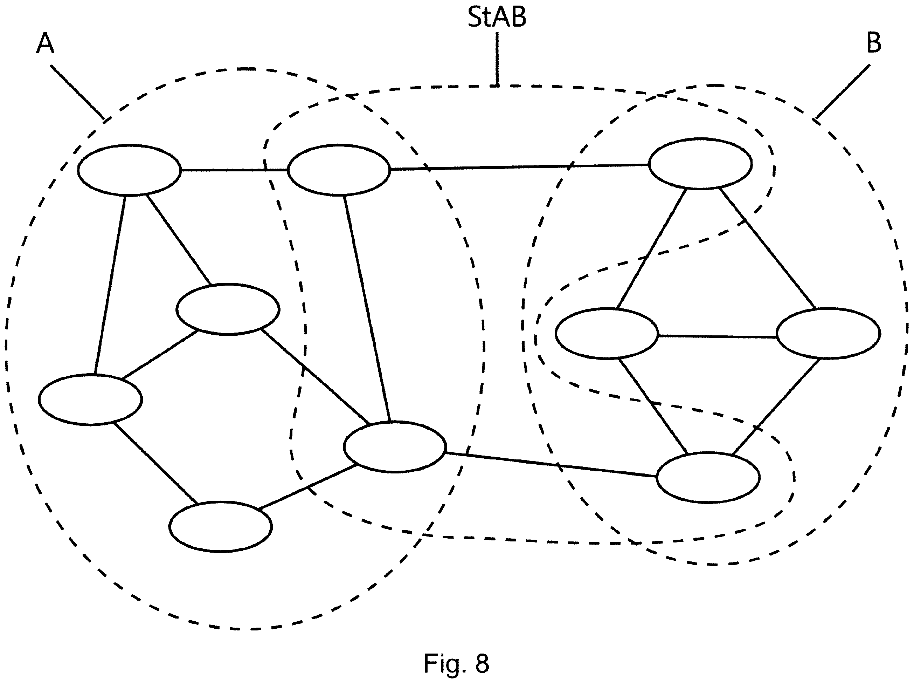

In a favorable embodiment of the network configuration, illustrating the variant with a contact domain (Figure 8) there are defined the domain linking contact elements common to the two operators. The network seen by each operator is limited to their domains and those two objects of a neighboring domain that are necessary to achieve the visibility of contact objects.

### Domains

**A, B, StAB**

### Roles

Role: User A
Viewing: **A, StAB**
Creating, Modifying, Deleting: A (optional **StAB)**

Role: User B
Viewing: **B, StAB**
Creating, Modifying, Deleting: **B** (optional **StAB)**

Role: Supervisor of AB interface
Viewing, Creating, Modifying, Deleting: **StAB**

### Linking objects and domains

All objects owned by the operator A are linked to the domain **A.** In addition, the objects involved in the contact definition AB also belong to **StAB**

All objects owned by the operator B are linked to the domain **B.** In addition, the objects involved in the contact definition AB also belong to **StAB**

The domain operator has the ability to view the contents of own domain and those objects of the neighboring domain that are necessary to view the contact objects. In addition, the operator can modify his own domain and, optionally, the contact objects. Alternatively, it is possible to distinguish the role of the interface administrator, who is entitled to create and modify the contact objects. In the described configuration, it is possible to create the contact objects, not included in the figure, which are not associated with the domains **A, B** and are only the contact objects, such as nodes.

In the described configuration, none of them has full visibility of the entire network, and traffic flows - path - inter-operator-relations define the sequences of objects, each of which is entirely closed up in a single domain and when reaching the point of contact, it is continued with the next object. These flows are assigned to both its parent, as well as contact domain. In the case of the occurrence of a larger number of operators, for example A, B, C, the contact domains can be defined for the following pairs of operators: StAB, StAC, StBC or used as a single contact domain consisting of all contact objects of all StABC domains.

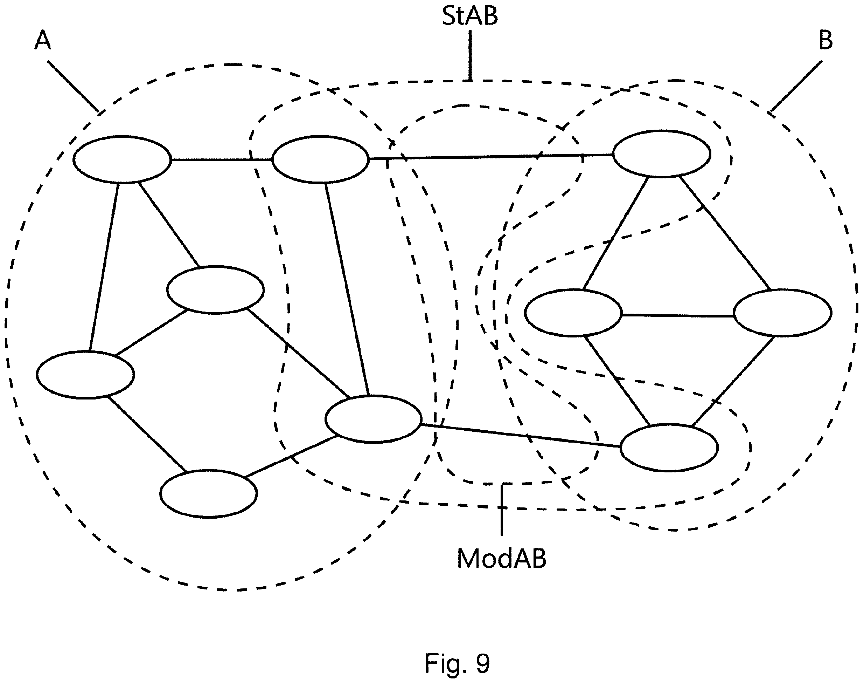

In a favorable embodiment of the network configuration, illustrating the variant with contact domains for viewing and modifying (Figure 9), there are defined two contact domains separating the rights to modify from the rights to view the network structure.

### Domains

**A, B, StAB, ModAB**

### Roles

Role: User A
Viewing: **A, StAB**
Creating, Modifying, Deleting: **A, ModAB**

Role: User B
Viewing: B, **StAB**
Creating, Modifying, Deleting: **B**, **ModAB**

### Linking contact objects with domains

Contact nodes of the operators A and B are linked to the domain **StAB** and domains **A** and **B** of both operators. This prevents modification of nodes by a foreign operator.

Contact connectors are linked to the domains **StAB** and **ModAB,** which allows their modification by both operators.

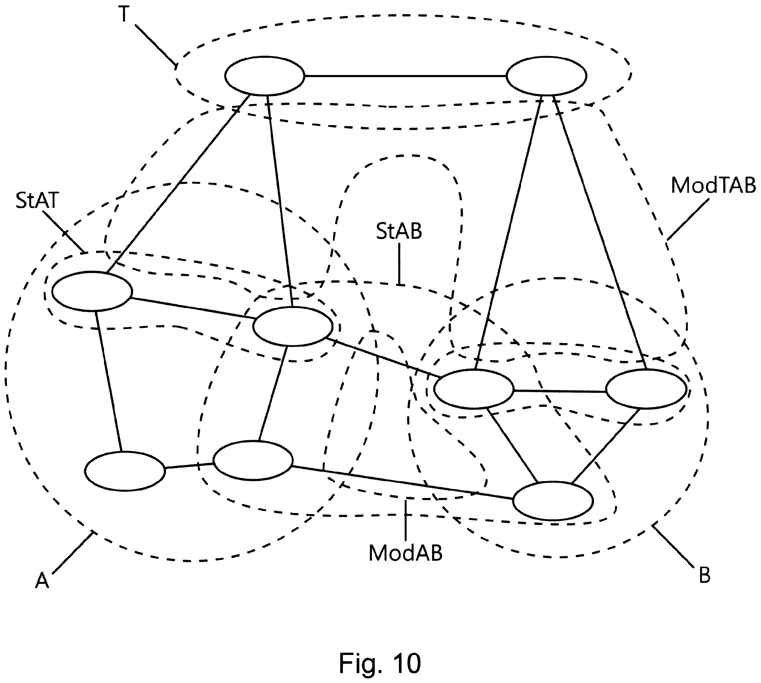

Another favorable embodiment of the network configuration is illustrated by the variant with a transit operator (Figure 10).

### Domains

**A, B, T, StAT, StBT, StAB, ModAB, ModTAB**

### Roles

Role: User A
Viewing: **A**, **T, StAB, ModTAB** (optional **StBT)**
Creating, Modifying, Deleting: **A, ModAB**

Role: User B
Viewing: **B, T, StAB, ModTAB** (optional **StAT)**
Creating, Modifying, Deleting: **B, ModAB**

Role: User T
Viewing: **T, StAT, StBT, ModTAB**
Creating, Modifying, Deleting: **T, ModTAB**

### Linking contact objects with the transit domain T.

Contact nodes in the domains **A** and **B** linked to **T** are located in the domains **StAT** and **StBT.** These include the nodes **A** and **B** available to the operator T.

Links between **A**, **B** and **T** are grouped in the domain **ModTAB** involving points of contact between local subnets and transit network. Only the transit network operator has the right to edit these objects.

Nodes of the T network are all available for viewing by the operators A and B. This allows each of them to analyze the topology of the transit network and own transit traffic directed to other end operators, possibly up to the entry point of the traffic to the destination network.

If necessary, it is possible to separate the inner part of the infrastructure of the transit network T to a private domain (not included in the Figure), which would be invisible to the operators A and B.

It is also possible to use the variant from above the configuration, where the domain **T** is not visible to the operators A and B. In this case, the transit traffic can be analyzed only by the T domain operator.

For physical objects there is available only a single type of relationship, i.e. the relationship of parent-child type, associated with the conclusion of objects in the tree, and the majority of devices and locations is linked to a particular operator. This means that a typical configuration of the domains in the physical architecture comes down to the creation of one domain for each operator and the creation of one user role for the domain. Such user has all rights to own domain and no rights to other domains. The above configuration requires the extension, if there is the possibility of collocations or sharing of devices in the network. In such cases you can only define the role of administrator, supervisor and a person deciding about resource sharing.

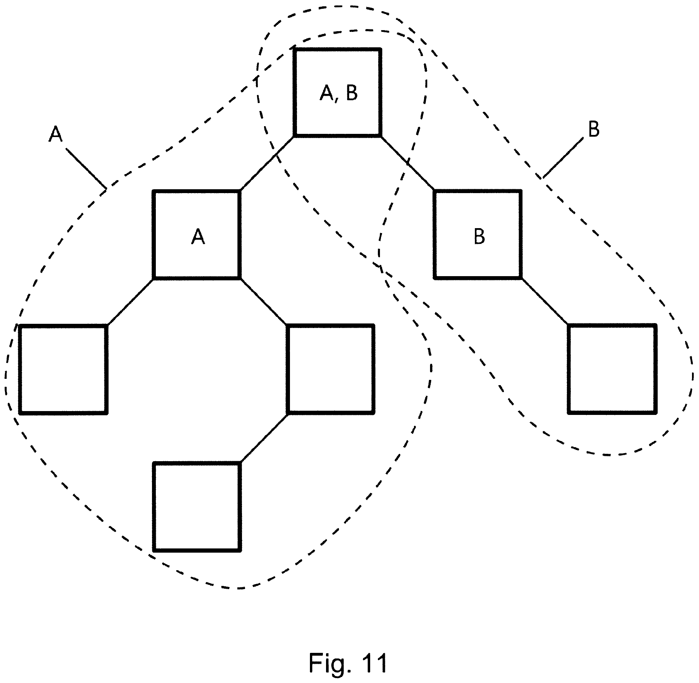

Favorable examples of the configuration of rights to objects of the physical architecture, associated with sharing the trees of objects, are shown in Figures 11, 12 and 13. In the drawings, inside rectangles symbolizing the objects, there are presented domains assigned to them. These assignments, through the mechanism of inheritance of domains in the tree of objects, propagate to the objects in subtrees.

In a favorable embodiment, where a physical resource, for example, location or building, is jointly owned by the two operators or they have equal rights of use, there is applied a symmetric model of rights (Figure 11).

### Domains

**A, B**

### Roles

Role: User A
Viewing, Creating, Modifying, Deleting: **A**
Role: User B
Viewing, Creating, Modifying, Deleting: **B**

### Linking the rooted object

The root belongs to the domains **A** and **B** and can be freely modified by both operators.

This configuration allows the deletion of a common root by any of the operators. Depending on the requirements on safety and separation of the operators, this may be unacceptable.

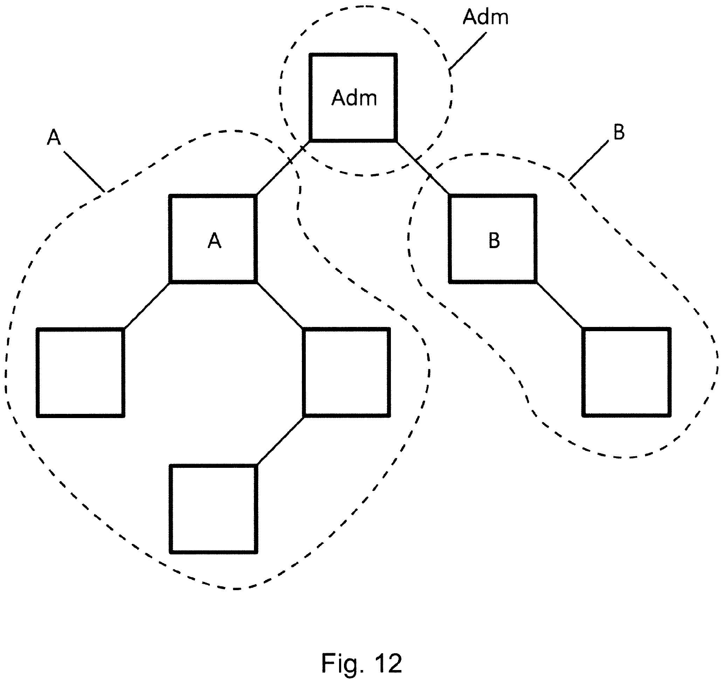

Another favorable embodiment, in which a symmetrical model of rights is used, is shown in Figure 12. Physical resource, such as location or building, is co-owned by two operators, and it is necessary to prevent the first operator from performing operations that would be devastating to the data of the second operator; there is defined an additional role - conflict settlement administrator.

### Domains

**A, B, Adm**

### Roles

Role: User A
Viewing, Creating, Modifying, Deleting **A**
Viewing, Modifying, Creating: **Adm**

Role: User B
Viewing, Creating, Modifying, Deleting: **B**
Viewing, Modifying, Creating: **Adm**

Role: Administrator
Viewing, Creating, Modifying, Deleting: **Adm**

### Linking the rooted object

The root belongs to the domain **Adm.** It can be deleted exclusively by the administrator, which causes cascading deletion of all subobjects, and all operators have the ability to modify it.

The described configuration can be created in an evolutionary way by converting the object tree belonging entirely to a single operator, for example, the operator A. The operator A shares the root of his tree with other operators by adding to the domain **Adm** and deleting from his own domain **A.** Such configuration may be created again by any operator, because each operator has the right to create new objects in the domain **Adm.**

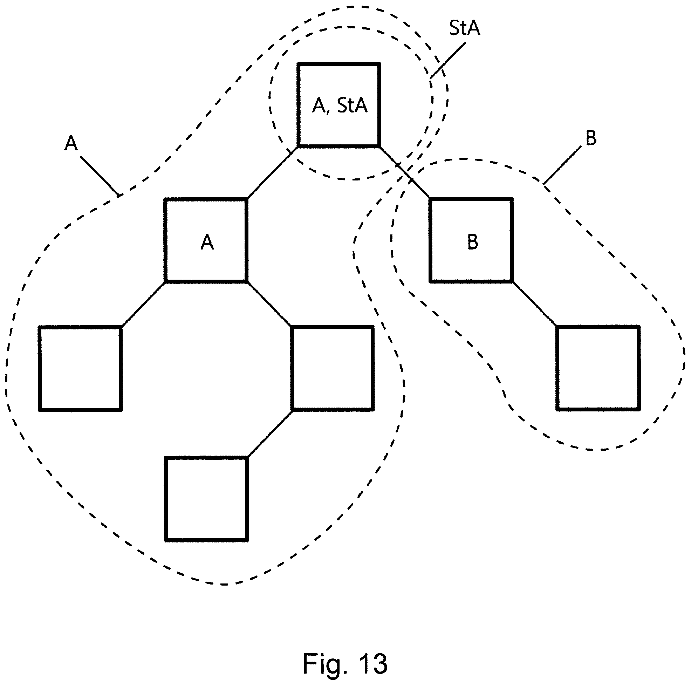

Another favorable embodiment involving the use of an asymmetric model of rights, is shown in Figure 13. The operator A provides the ability to create or use his infrastructure in a given location, while remaining the owner of this location. In this example you can define the contact domain **StA** covering the objects belonging to the operator A, made available to other users.

### Domains

**A, B, StA**

### Roles

Role: User A
Viewing, Creating, Modifying, Deleting: **A, StA**

Role: User B
Viewing, Creating, Modifying, Deleting: **B**
Viewing, Modifying (optional): **StA**

### Linking the rooted object

The root belongs to the domain **A** and the public domain **StA** of the operator A. Only the operator A can delete the root. The operator B has the ability to view, optionally, to modify the root through the public domain StA of the A operator.

The configuration is created when the operator A shares the elements of his infrastructure with other operators, still remaining their owner. The operator A is the owner of the domain **StA** containing all the objects shared with other operators. The operator can freely add and remove objects from this domain. It is also possible to define separate public contact domains for each pair of sharing operator - using operator (StAB, StAC, etc.) or to define two separate domains by each operator: the public domain **StA** - read-only and allowing to add subobjects, as well as the public domain ModA - allowing to read and modify, as well as to block only the possibility of deleting the objects.

The above examples describe the creation of configurations of domains and rights separately for both - logic and physical architecture. This means in general that the domain AL owned by the operator A, designed to control the rights to logical objects, can be a different object that the domain AP, designed to control the rights to physical objects. Independent assigning of rights to these domains to specific roles defines the users entitled, for example, to modify the logical architecture, but with no similar rights to objects of the physical architecture.

In other favorable embodiments, the same domain object applies to both the logical and physical architecture, as the set of rights to different types of domains is the same in those two architectures. In the examples of the configuration of rights for both the physical and logical architecture there are defined the following types of domains:

Domains marked as A and B - represent the private domains of particular operators. The users of these operators have full right to all operations of modification of objects in these domains, while the users of other operators in the basic system configuration have no right to objects in these domains. In the system configuration with full visibility of all objects, the users of other operators have the right to view these objects.

Domains marked as StA and StB - represent the contact objects belonging to the domains of the operators A and B and those made available to other operators. Optionally, it is possible to define domains StXY representing the objects of a domain X made available to a particular foreign operator Y. The users of other operators have the right to view these objects (optionally, to modify them).

Domains marked as ModAB and ModAC - represent the objects at the interface between two domains, which may be modified and deleted by both operators.

Accepted definitions of domains and rights used in the physical and logical architecture are compatible. Only the rules of assignment of physical and logical objects to these domains are specific for a given architecture.

The described examples of the creation of domain configurations and rights do not restrict the possibility of use of other types of rights, particularly the rights to particular classes. Rules for the use of other rights and their interpretation with regard to the objects of physical and logical architectures are independent of the rules described above. In case of the concomitant use of rights under the definition of domains and other types of rights, a logical conjunction is used. This means that in order to perform a particular operation, for example, viewing or modifying, it is necessary to have rights under the definition of domains and other types of rights.

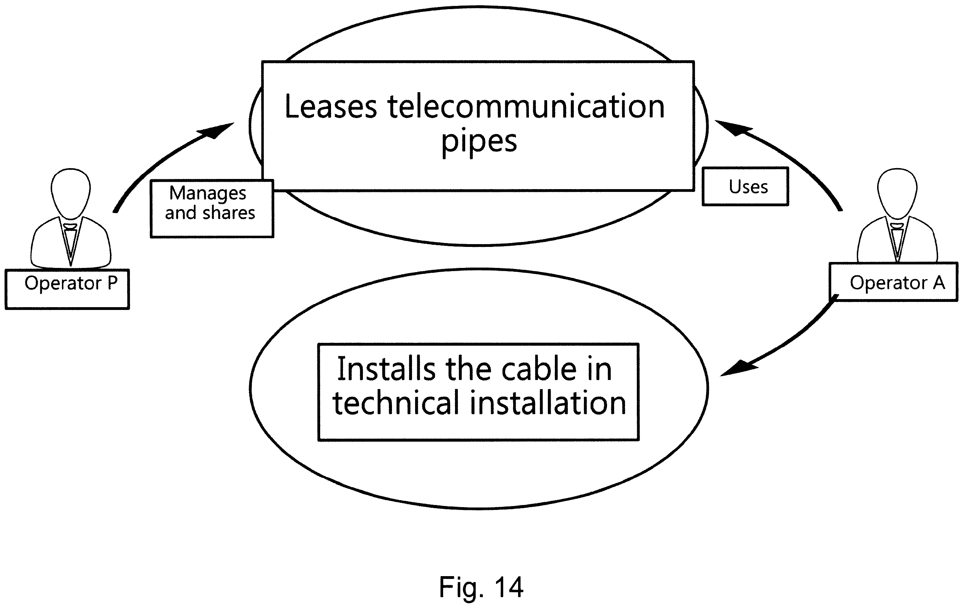

A favorable example of the use of the inventory method of the open broadband networks in case of the lease of passive infrastructure elements is shown in Figure 14. Conduits for electrical installations is owned by the passive infrastructure operator, i.e. the **Operator P**. In the region, there are several active infrastructure operators. One of them, i.e. the **Operator A,** wants to install a cable for his applications. For this purpose he leases the telecommunications pipe from the **Operator P.** In this case, every act of lease is related to the creation of a separate object. The **Operator A** is not able to directly modify the attributes of this object. However, he has the possibility to install in the pipe of his own cable. This means that the user associated with the active infrastructure operator can modify the object associated with the lease only in the context of the functionality of the cable installation or uninstallation.

In order to effectively control access to the object associated with the lease, there is introduced a specialized level of rights used for modification only in the case of installation and uninstallation. This allows you to make limited changes in the object only in the context of particular operations. Selected rights to classes enable to perform only certain operation on the data. Leased objects are grouped in a single domain and are given limited rights, so that the **Operator A** cannot perform any operation on them.

For the purposes of this case there was defined a specific level of rights (Installation), operated in a specialized manner within the actions performed in the system. The right applies to the possibility of installing resources in other resources, not owned by a given person. The rights to the installation are given by the pipe owner, in this case the **Operator P,** who indirectly assigns the appropriate resources to the domain **OperALeasesFromOperP,** which in turn gives rights to the installation. Thus, the objects in which the Operator A can install his own resources will need to be pre-assigned to the domain by the **Operator P.** The domain **OperALeasesFromOperP** contains all the objects leased by the **Operator A** from the **Operator P.** The **Operator P** has the right to assign his own objects to this domain, thereby giving other persons the rights referred to in the contexts of the domain, who will have access to this domain. In particular, he can give the right to modify, which, however, in this case would be inadvisable. The point is to limit the range of possibilities to the **Operator A,** rather than granting full rights (Table 8 and Table 9). Rights to particular attributes-and objects are not given in this case, since there is no need.

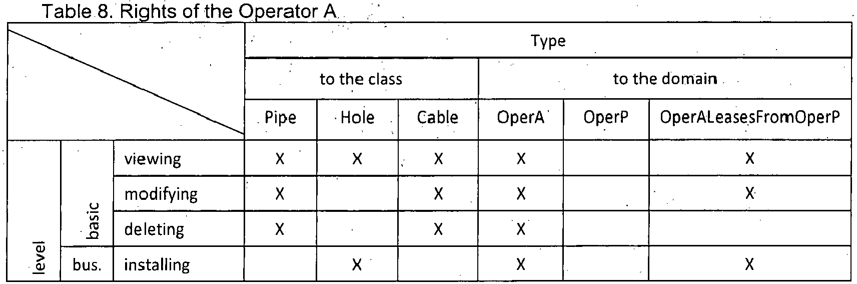

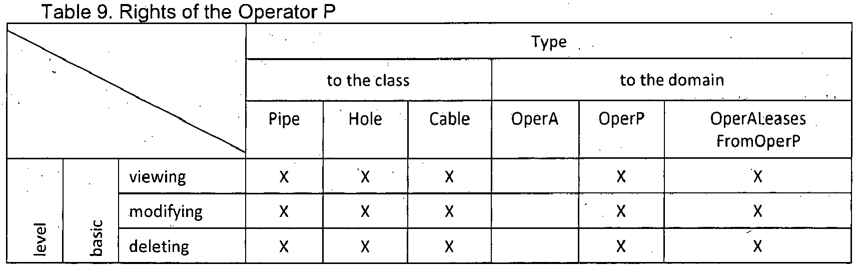

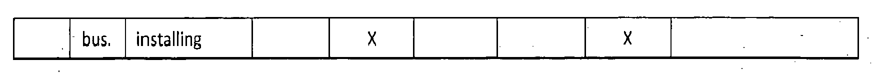

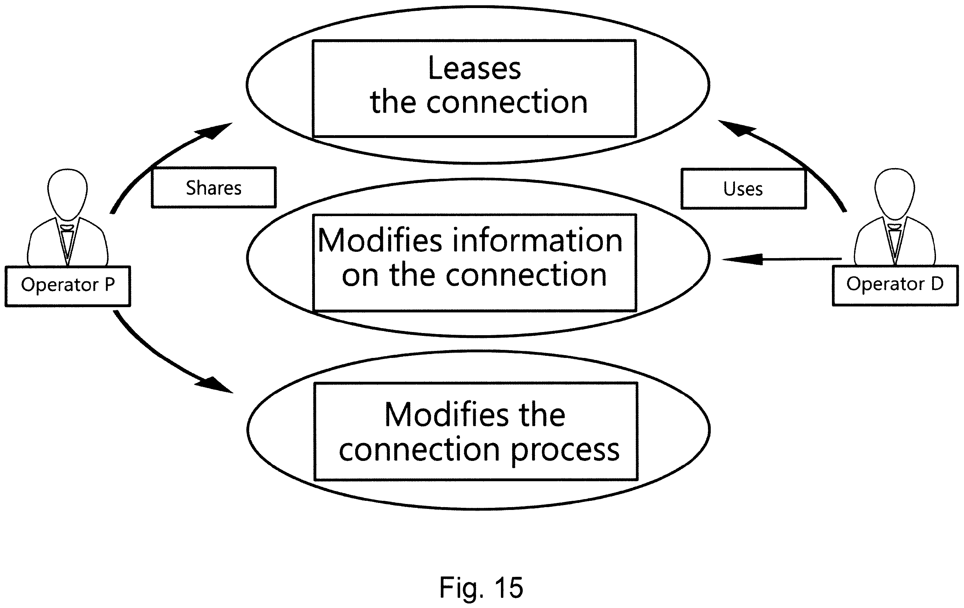

Another favorable embodiment of the use of the inventory method of the open broadband networks is shown in Figure 15. The example relates to the lease of an optical cable fiber. Optical cables for telecommunications are usually given a particular capacity. Owners often lease a part of the capacity to other persons. In this example, the **Operator A** of the active infrastructure has the optical cable in a specific relationship with a total capacity of 100 fibers. The owner used 40 fibers to his own needs, and another 20 were kept in reserve. The remaining 40 were intended for the lease of other operators. The lease does not apply to the fibers, but connections passing through them. Operators using these connections may associate them with clients and services, but do not have an impact on the connection structure, including changes of fiber seams running along the length of the optical cable. All the modifications of the connection structure may be performed exclusively by the owner, i.e. the **Operator A,** in particular, at the request of the lessee, which in this case is the **Operator D.** The latter has no access to the object of the cable itself, and so it is impossible to determine whether, in relation to the cable, there was created the connection for other suppliers and which clients use such connections. Control of the connection to the fiber is carried out by using the mechanism of domains. Fiber objects assigned to one of them cannot be deleted. However, they may be modified. This allows the operator using the leased fiber to adapt them to his own needs, but without the possibility to disassemble from the cable. In this case, both operators are granted full rights to classes, with the exception of the previously introduced specialized right. There is no need, however, to influence the resultant rights to fiber objects in the dimension of classes. There is also no need to provide rights individually to the attributes.

**The Operator D** gets the right to a new object of the class (Fiber). He can modify it, but cannot delete it. The new object is assigned to the domain OperALeasesFromOperP (Table 10 and Table 11).

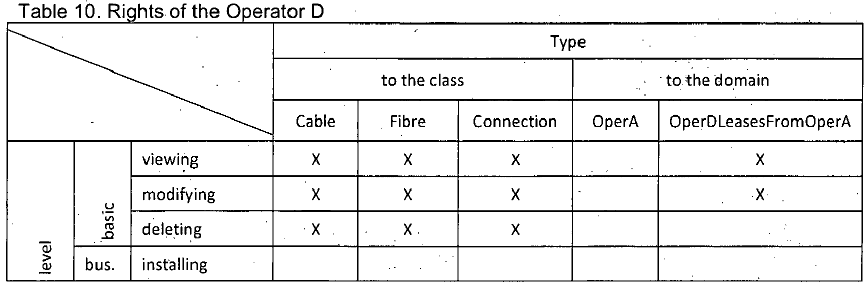

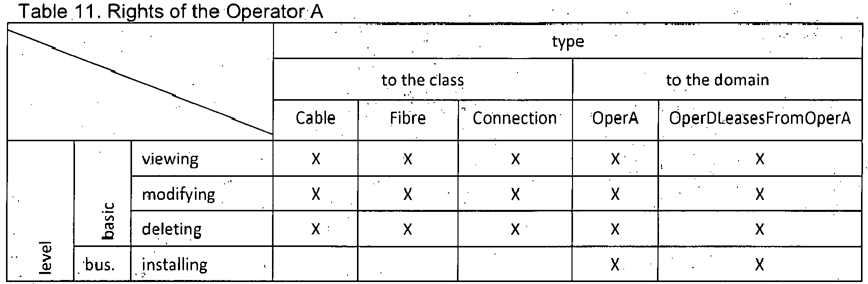

The following describes an example of using the inventory method of the open broadband networks for record-keeping of services. In this example, many operators use the same system in order to keep records of services. Each operator has the ability to record information about own services, but has no access to other operators, due to the use of domains that uniquely identify the set of objects, to which the user linked with the operator has access to. Only the operator can work with assigned clients and instances of services, both client-and resource-oriented. Each user is assigned to his own set of objects representing clients and services.

As in the previous cases, it is done on the basis of the mechanism of domains. It is the affiliation, which determines whether the user has the ability to use a particular object. By default, the users associated with particular persons have full rights to classes. Rights to particular objects are not given here, as there is no such need. In some cases, the rights to attributes prove to be useful - with them you can restrict access to certain attributes of classes of service specifications that can be potentially shared.

Objects of the Operator A belong to the domain of the **Operator A,** in relation to which he has full rights. Analogically, the other owner, i.e. the **Operator B,** is able to fully use the objects included in the domain of the **Operator B.** For specification of services, it is possible to share the corresponding objects, but only on the basis of assigning a particular object to domains owned by certain users. In addition, with the rights to attributes you can restrict access to some of them for shared objects.

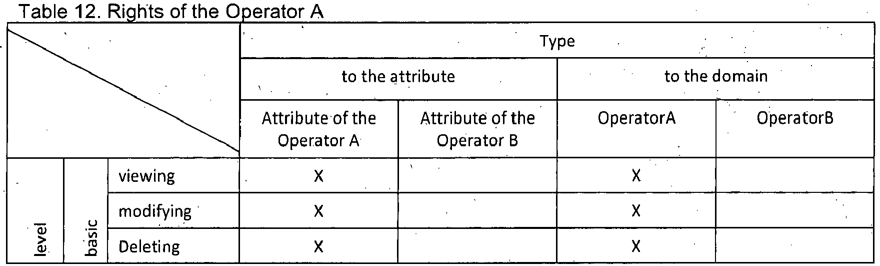

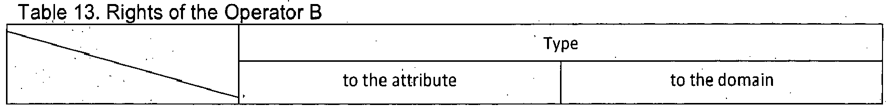

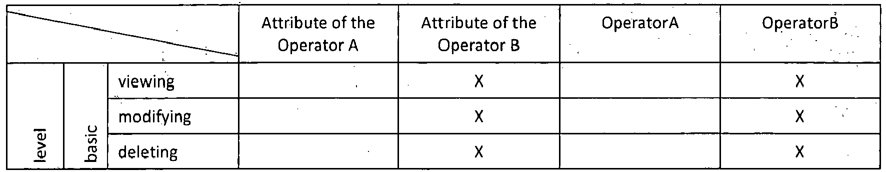

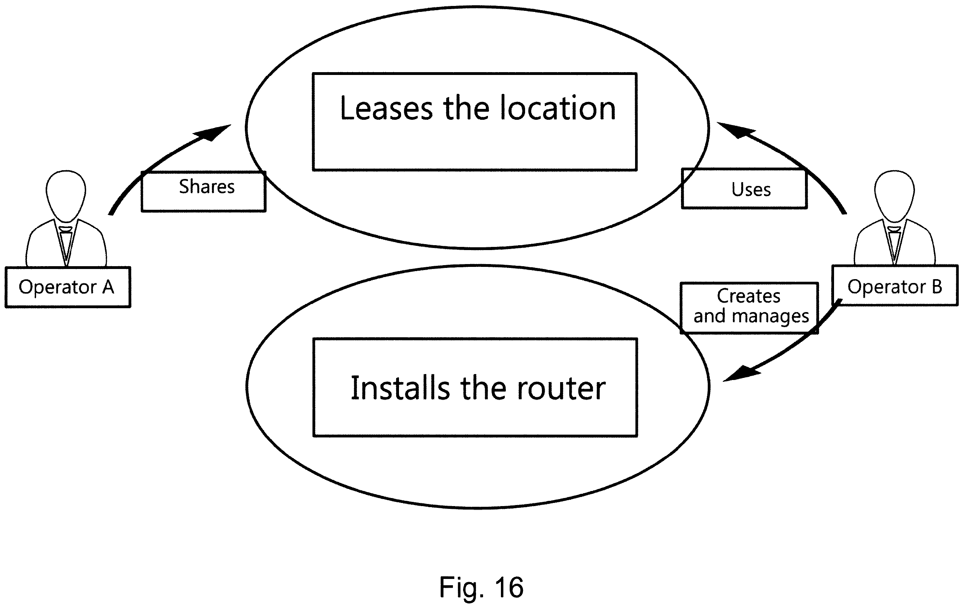

Another favorable embodiment of the use of the inventory method of the open broadband networks is shown in Figure 16. This example relates to the lease of space in the server room. One operator installs his own device with the internal structure, such as router with cards, in the server room owned by another operator. The device owner shall have full access to modify the information on his own resources, while the server room owner shall see that the device is installed in the cabinet, but shall not see the parameters and the structure of the device. For this purpose there is used the mechanism for access to domains and an additional level of rights -installation. Rights to the class (Server Room) are given to both operators. The **Operator A** is the owner of the server room represented by a single object in the system. The **Operator B** has the possibility to install his own device there, and gets an additional level of rights - Installation. The **Operator B** has access to the server room object at this additional level, but cannot view, modify or delete it (Table 14 and Table 15).

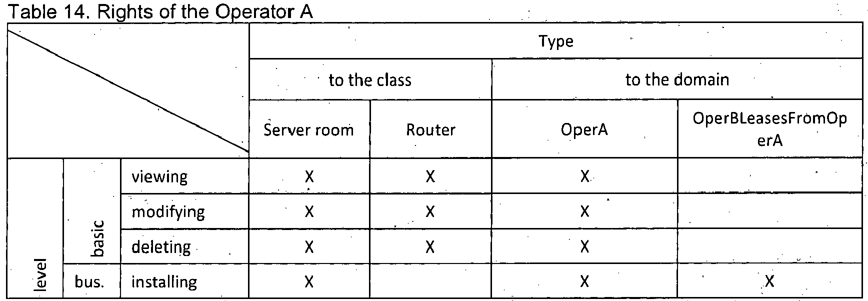

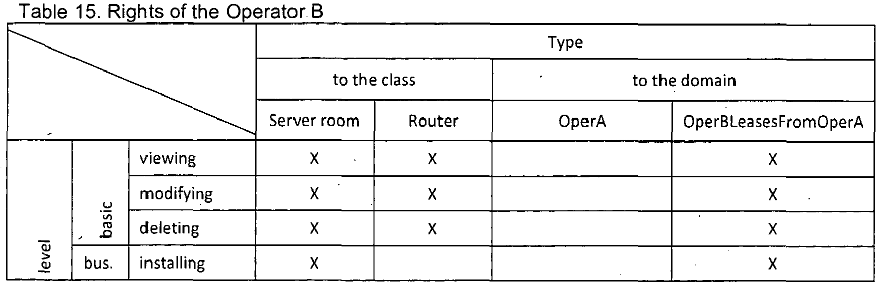

## Claims

1. Inventory method of the open broadband networks, involving the creation of an object database, containing information about physical and logical network resources, and then linking it to the users by assigning them with rights to database resources is **characterized by** the fact that all system data, such as business information, model data: attributes, syntax and data on rights, including the data from various users of the system are stored in a uniform manner in the object database of the structure of seven relational tables, including one that stores the numbering of objects and six that store the attribute values, whereby each table contains a fixed number of columns and a variable number of rows, defining the objects of the class of role that store a set of rights to the data, including: the right to domains, the right to objects, the right to classes, the right to attributes, the right to functions, while the right to domains is assigned to the objects of the class of domain, which are linked to particular inventory objects, whereby each object is associated with at least one domain, and then there are established the rights to particular objects by assigning them to the object of the rights to objects, to the family of objects with similar characteristics by assigning them to the object of the right to classes, to particular attributes by assigning them to the object of the right to attributes, to particular applications and selected functionalities by assigning them to the object of the right to functions, and each user of the system is assigned with specific roles.

2. Inventory method of the open broadband networks, according to the claim 1, is **characterized by** the fact that a single inventory object can be assigned to multiple domains.

3. Inventory method of the open broadband networks, according to the claim 1, is **characterized by** the fact that individual roles are grouped in collective roles, creating a hierarchical tree in such a way that the parent role contains the sum of rights.

4. Inventory method of the open broadband networks, according to the claim 1, is **characterized by** the fact that the right to domain is the end-to-end approach - exists or does not exist.

5. Inventory method of the open broadband networks, according to the claim 1, is **characterized by** the fact that the right to domains allows you to view objects and/or create new objects and/or modify the existing objects and/or delete the objects belonging to the domain.

6. Inventory method of the open broadband networks, according to the claim 1, is **characterized by** the fact that the right to logical object, resulting from its affiliation to the domain, is applied directly to this object.

7. Inventory method of the open broadband networks, according to the claim 1, is **characterized by** the fact that the right to dependent logical object also requires the right to base object.

8. Inventory method of the open broadband networks, according to the claim 1, is **characterized by** the fact that the rights to physical object, resulting from its affiliation to the domain, are applied directly to this object.

9. Inventory method of the open broadband networks, according to the claim 1, **characterized by** the fact that the rights to physical objects, for which there is no defined relationship with the domain, are inherited from the parent object.

10. Inventory method of the open broadband networks, according to the claim 1, is **characterized by** the fact that a relational table that stores the numbering of objects, contains three columns: object identifier, object name and date of the last modification of the object, while the tables that store attribute values contain the following columns: attribute identifier, database number containing attribute definition, object identifier, database number containing the object, object value identifier, attribute value, the initial date of the application of values, as well as the final date of the application of values, whereby one of the tables contains an additional column - the number of the database which stores the object being the attribute value.
